# EUROPÄISCHE PATENTSCHRIFT

(11) **EP 0 834 458 B1**
(45) Veröffentlichungstag und Bekanntmachung des Hinweises auf die Patenterteilung: **17.03.2004**
(21) Anmeldenummer: 97115400.0
(22) Anmeldetag: 05.09.1997
(51) Int. Cl.: B65G 1/137

(54) **Rechnergesteuerte Kommissioniervorrichtung zum Kommissionieren von "Softgood"-Artikeln**
Computer-controlled device for order picking of softgood articles
Dispositif à commande par calculateur pour la préparation de commandes d'articles souples

(30) Priorität: 24.09.1996 DE 19639049
(43) Veröffentlichungstag der Anmeldung: 08.04.1998
(73) Patentinhaber: Quelle Aktiengesellschaft, 90762 Fürth (DE)
(72) Erfinder: Büschel, Steffan, 90762 Fürth (DE); Häussler, Jörg, 90480 Nürnberg (DE); Christ, Ferdinand, 91575 Windsbach (DE); Pawlikowski, Georg, 91522 Ansbach (DE)
(74) Vertreter: Matschkur, Lindner Blaumeier Patent- und Rechtsanwälte

(56) Entgegenhaltungen:
- EP-A- 0 802 128
- DE-A- 4 126 554
- DE-A- 4 213 301
- DE-C- 4 338 407
- FR-A- 2 126 265
- US-A- 3 770 140

## Beschreibung

Die Erfindung betrifft eine rechnergesteuerte Kommissioniervorrichtung zum Kommissionieren von Softgood-Artikeln, mit einem motorisch angetriebenen Förderband und mehreren, wenigstens an einer Seite des Förderbandes nebenund/oder übereinander angeordneten Aufnahmen zum Aufnehmen der zu kommissionierenden, aufeinanderstapelbaren Softgood-Artikel, die mittels eines rechnergesteuerten Ausgabemittels auf das die Artikel weitertransportierende Förderband abgegeben werden.

Eine derartige Kommissioniervorrichtung ist aus der DE 41 26 554 A1 bekannt. Als Ausgabemittel wird hier ein am Ende der die Artikel beinhaltenden schachtartigen Aufnahme angeordnetes Förderband verwendet, auf welchem der jeweils unterste Artikel, auf den die nachfolgenden aufgestapelt sind, aufliegt. Dieser Artikel wird durch Unterdruck angesaugt und anschließend abgezogen. Diese bekannte Kommissioniervorrichtung ist aber in mehrerlei Hinsicht nachteilig. Denn zum einen ruht auf dem jeweils untersten, vom Förderband abzuziehenden Artikel das Gewicht der Artikelsäule, was das Vereinzeln erschwert. Schwere Artikel werden von der Vakuumdüse überhaupt nicht mitgenommen. Nachteilig ist ferner, daß die Artikel zwangsläufig in Folie eingeschweißt werden müssen, damit das auf dem Ansaugen der Artikel basierende Abzugsprinzip überhaupt funktioniert. Ferner kann es vorkommen, daß der unterste Artikel am darüberliegenden einigermaßen fest haftet, was dazu führt, daß auch der darüberliegende beim Abzug des unteren Artikels teilweise mitgenommen wird. Zwar wird dieser über ein darüberliegendes Anschlagblech am Abzug gehindert, jedoch liegt er auf jeden Fall nicht mehr derart bereit, daß er problemlos abgezogen werden könnte.

Aus DE-C-43 38 407 ist eine Vorrichtung bekannt, bei der ein Gegenstand, im dort beschriebenen Fall eine in einem Versandhandelshaus eingegangene Retoure, die auf einem Tisch liegt, mittels eines nicht näher spezifizierten Hebewerkzeugs in eine Lagerkiste gelegt wird.

Ferner ist aus US-A 3,770,140 eine Werkzeug- oder Bearbeitungsmaschine bekannt, bei der einem Greifer ein Sensorelement zum Detektieren der Position des Greifers bezüglich des zu handhabenden Gegenstands zugeordnet ist.

Der Erfindung liegt somit das Problem zugrunde, eine Kommissioniervorrichtung anzugeben, welche ein einfaches und sicheres Entnehmen der Artikel aus der Aufnahme ermöglicht.

Zur Lösung dieses Problems ist bei einer Kommissioniervorrichtung der eingangs genannten Art erfindungsgemäß vorgesehen, daß das Ausgabemittel als bewegliches, an dem in der Aufnahme obenliegenden Artikel oberseitig lösbar angreifendes, diesen entnehmendes und zum Förderband hin abgebendes Mittel ausgebildet ist, und daß dem Ausgabemittel wenigstens ein Sensorelement zum Detektieren der Positionierung des Ausgabemittels bezüglich des obenliegenden Artikels vor dem Greifen desselben zugeordnet ist, wobei der Betrieb des Ausgabemittels in Abhängigkeit des Detektionsergebnisses erfolgt, wobei den mehreren nebenund/oder übereinander angeordneten Aufnahmen jeweils ein eigenes Ausgabemittel zugeordnet ist, oder wobei mehreren nebeneinander angeordneten Aufnahmen ein gemeinsames, längs einer Führung bewegbares und vor einer einen zu entnehmenden Artikel beinhaltenden Aufnahme positionierbares Ausgabemittel zugeordnet ist.

Der Artikel wird also erfindungsgemäß von oben entnommen, d.h., es ist lediglich das Gewicht des Artikels selbst zu bewegen, nicht aber gegen das komplette Gewicht der Artikelsäule zu arbeiten. Der Artikel kann somit vorteilhaft wesentlich einfacher vereinzelt werden, als dies im Stand der Technik der Fall war. Als zweckmäßig hat es sich hierbei erwiesen, wenn das Ausgabemittel als zangenartiger Greifer, als Saugmittel oder als klebendes Haftmittel ausgebildet ist, wobei insbesondere der Greifer, welcher den Artikel direkt greift und klemmt, sich als zweckmäßig erwiesen hat, da dieser zum Entnehmen sowohl von beispielsweise folienverschweißten Artikeln, wie beispielsweise Hemden od.dgl., als auch von unverpackten Artikeln, die beispielsweise lediglich mit einer Banderole od.dgl. zusammengehalten sind, verwendet werden kann, denn bedingt durch den direkten, den Artikel bzw. die Verpackung klemmenden Angriff ist in jedem Fall ein sicheres Packen und Entnehmen möglich.

In weiterer Ausgestaltung ist vorgesehen, daß dem Ausgabemittel wenigstens ein Sensorelement zu Detektieren der Lagebeziehung des Ausgabemittels zum obenliegenden Artikel zugeordnet ist, wobei der Betrieb des Ausgabemittels in Abhängigkeit des Detektionsergebnisses erfolgt. Auf diese Weise ist es möglich, sicherzustellen, daß das Ausgabemittel bezüglich des Artikels richtig positioniert ist bzw. an diesem eine sichere Halterung gewährleistend angreift, um dann, sofern diese Voraussetzungen gegeben sind, erst den eigentlichen Angriff und die Entnahme anzustoßen. Dabei hat es sich als zweckmäßig erwiesen, wenn das Sensorelement als am Ausgabemittel derart angeordneter Tastschalter ausgebildet ist, daß ein zur Steuerung des Betriebs erforderliches Signal bei hinreichender, den Eingriff am Artikel ermöglichender Positionierung gebbar ist, wobei vorzugsweise zwei Tastschalter vorgesehen sind. Gleichermaßen sind aber auch optische oder mechanische Sensorelemente verwendbar.

Eine erfindungsgemäße Alternativausführung sieht vor, daß die Führungseinrichtung als sich horizontal oder vertikal längs mehrerer Aufnahmen erstreckende Führungsschiene od.dgl. ausgebildet ist, an welcher wenigstens ein Greifer längs der Aufnahmen, an diesen zum Entnehmen des Artikels reversibel positionierbar, verfahrbar gelagert ist, wobei die Führungsschiene und/oder der Greifer, ggf. mittels eines an der Führungsschiene schwenkbar gelagerten Führungsarmes, zur Ermöglichung des Zugriffs bezüglich der Aufnahmen beweglich, insbesondere schwenkbar ist. Diese insbesondere für Mittel- und Langsamdrehervorrichtungen geeignete Ausführung sieht also nicht ― wie die andere Alternative - für jede Aufnahme ein Ausgabemittel vor, vielmehr ist dieses - oder aber mehrere - längs der Aufnahmen auf einer geeigneten Führungsschiene od.dgl. verfahrbar und kann bei Bedarf vor der jeweiligen, den gewünschten Artikel beinhaltenden Aufnahme positioniert werden, so daß die genannten Mittel- und Langsamdrehervorrichtungen entsprechend weniger aufwendig gestaltet werden können.

Als besonders vorteilhaft hat es sich erwiesen, wenn das Ausgabemittel zwischen der am Artikel angreifenden Stellung und der den Artikel abgebenden Stellung längs einer bogen- oder kurvenförmigen, einen Mindesthub des Artikels ermöglichenden Bahn geführt ist. Diese bogen- oder kurvenförmige Führung, die im wesentlichen dem Angreifvorgang entspricht, wie er manuell erfolgen würde, ermöglicht vorteilhaft einen Mindesthub, welcher es letztlich ermöglicht, den gegriffenen Artikel zunächst ein kurzes Stück anzuheben, um dann erst die eigentliche translatorische Bewegung zu beginnen, wobei die bogen- oder kurvenförmige Bahn selbstverständlich nicht über die gesamte Bewegungsstrecke zwischen den beiden definierten Stellungen. führen muß, sondern lediglich innerhalb eines Teilbereichs davon realisiert sein kann, wobei dieser dann zweckmäßig sich unmittelbar an die Angriffsstellung anschließt. Alternativ hierzu kann das Ausgabemittel aber auch längs einer im wesentlichen geradlinigen, ggf. zur Horizontalen geneigt verlaufenden Bahn geführt sein kann. Vor allem betreffend die letztere Führungsalternative, gleichermaßen aber auch für die erstgenannte Bogen- oder Kurvenführung, kann es ferner zweckmäßig sein, wenn das Ausgabemittel zumindest dann, wenn es in eine Position oberhalb des zu entnehmenden Artikels gebracht ist, längs einer im wesentlichen geradlinigen, im wesentlichen senkrecht verlaufenden Bahn geführt ist, um auf diese Weise einen größeren vertikalen, der Vereinzelung dienenden Hub zu realisieren.

Um eine sichere Bewegung des Ausgabemittels zu ermöglichen, kann das Ausgabemittel über eine motorisch angetriebene Führungseinrichtung bewegbar sein, wobei diese eine Kette, ein Seilzug oder ein Riemen sein kann, woran das Ausgabemittel, vorzugsweise über eine zwischengeschaltete, insbesonders stangenförmige Halterung, angeordnet ist. Eine zweite Erfindungsalternative sieht vor, daß die Führungseinrichtung ein stangenartiger, dreh- oder schwenkbarer Führungsarmt ist, längs welchem das Ausgabemittel, ggf. beweglich und vorzugsweise über eine zwischengeschaltete, insbesondere stangenartige Halterung, angeordnet ist. Beide Ausführungsalternativen ermöglichen eine sichere Führung des Ausgabemittels, beispielsweise des Greifers, in Richtung des Artikels wie auch in Richtung des Förderbandes, auf welches der Artikel dann abzugeben ist. Auch eine Ausbildung in Form einer dreh- oder schwenkbar gelagerten Wippe, längs welcher das Ausgabemittel z.B. auf Rollen geführt durch sein Eigenwicht läuft und die entsprechend geschwenkt wird zur Einstellung der jeweiligen Neigung, ist möglich.

Um den Raum der Aufnahme möglichst groß gestalten zu können, kann in Weiterbildung der Erfindung vorgesehen sein, daß die Führungseinrichtung an einer die Aufnahme begrenzenden Seitenwand od.dgl. außenseitig angeordnet ist, wobei die Seitenwand eine Durchbrechung aufweist, durch welche dann letztlich das Ausgabemittel bzw. die dieses führende Halterung ins Innere de Aufnahme greift. Diese Ausgestaltung ist ferner dahin zweckmäßig, als bedingt durch die außenseitige Anordnung ein Anschlagen der Artikel an der Führungseinrichtung oder eine Beschädigung der Artikel durch letztere ausgeschlossen ist. Als besonders zweckmäßig hat es sich erwiesen, wenn die Durchbrechung dabei im wesentlichen der Bewegungsbahn des Ausgabemittels, ggf. der Halterung entspricht und der, ggf. unter Verwendung eines Nutsteins od.dgl., Führung des Ausgabemittels, ggf. der Halterung dient, so daß auf diese Weise neben der Führung mittels der Führungseinrichtung eine zusätzliche Führung und Lagerung realisiert ist. Das Ausgabemittel kann ferner an der Halterung verschiebbar gelagert sein, was dahingehend von Vorteil ist, als die Aufnahmen in der Praxis nicht einer bestimmten Artikelgröße zugeordnet sind, vielmehr werden häufig nach Abarbeiten eines Artikelstapels weitere, größenmäßig verschiedene Artikel eingebracht, so daß es mit der erfindungsgemäßen verschiebbaren Lagerung möglich ist, das Ausgabemittel so auf der Halterung zu positionieren, daß, beispielsweise im Falle des Greifers, dieser exakt am jeweiligen Artikel angreifen kann.

Wie bereits beschrieben, zeichnet sich die erfindungsgemäße Führung des Ausgabemittels dadurch aus, daß vornehmlich zu Beginn des Entnahmevorgangs ein Mindeshub realisiert ist, der eine sichere Vereinzelung ermöglicht. Um diesen Effekt zu verstärken, aber auch um eine sichere Positionierung und Nachführung der Artikel zu gewährleisten, kann im Rahmen der Erfindung ferner vorgesehen sein, daß die Aufnahme ein die Artikel tragendes, mittels einer Hubeinrichtung motorisch höhenverstellbares Bodenteil aufweist, so daß die Artikel entsprechend nachführbar sind, gleichzeitig aber auch die Möglichkeit besteht, durch entsprechende Steuerung das Bodenteil nach Angreifen des Ausgabemittels am Artikel kurzzeitig abzusenken, und so den Vereinzelungsvorgang zu bewirken. Dabei kann das Bodenteil mit der Hubeinrichtung über eine vorzugsweise als mehreckige Stange ausgebildete Halterung verbunden sein, wobei insbesondere eine mehreckige Stange ein Verdrehen des Bodenteils, beispielsweise bedingt durch eine einseitige Beladung, sicher verhindert.

Um bei sich ändernder Artikelgröße für eine hinreichende Seitenführung der eingestapelten Artikel sorgen zu können, um zu verhindern, daß der Artikelstapel verkippt, kann erfindungsgemäß ferner vorgesehen sein, daß zumindest ein Teil der die Aufnahme begrenzenden Seitenwände versetzbar ausgebildet ist, beispielsweise in entsprechende am Tragrahmen der Vorrichtung einsteckbare Nuten od.dgl. einsetzbar und entsprechend verschraubbar od.dgl. ist. Als zweckmäßig hat es sich ferner erwiesen, wenn wenigstens ein Sensorelement, insbesondere ein optisches Sensorelement zum Detektieren des Füllstandes der Aufnahme vorgesehen ist, wobei hierfür Lichtschranken od.dgl. zweckmäßig sind, gleichermaßen aber auch mechanische Mittel wie ein bodenseitig eingelassener Tastschalter od.dgl.

Um eine sichere Abgabe des entnommenen Artikels auf das Förderband zu ermöglichen, kann der Aufnahme eine zum Förderband hin geneigte Rutsche zugeordnet sein, auf welche der jeweilige Artikel gegeben wird, wobei in diese in weiterer Ausführung eine Sensoreinrichtung, insbesondere eine Lichtschranke zum Zählen der auf die Rutsche gegebenen Artikel integriert ist. Weiterhin kann vorgesehen sein, daß an der Rutsche im Bereich zur Aufnahme hin, ein Distanzeinsatz lösbar anbringbar ist, mittels welchem ein sich bei Veränderung der Artikelgröße ergebender Spalt geschlossen wird und für eine vorderseitige Führung und Halterung der Artikel gesorgt wird, so daß auch ein Verkippen nach vorne bei kleineren Artikeln ausgeschlossen ist.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Vorderseitenansicht als Prinzipskizze der erfindungsgemäßen Vorrichtung,
- Fig. 2: eine Seitenansicht in Richtung des Pfeils ll aus Fig. 1,
- Fig. 3: eine Prinzipskizze der bogenförmigen Führung des Ausgabemittels,
- Fig. 4: eine Prinzipskizze der geradlinigen Führung des Ausgabemittels,
- Fig. 5: eine Prinzipskizze einer Schwenkarmführung,
- Fig. 6: eine Seitenansicht der Schwenkarmführung aus Fig. 5,
- Fig. 7: eine Prinzipskizze einer Kettenführung des Ausgabemittels,
- Fig. 8: eine Seitenansicht einer Seitenwand mit Aufsicht auf die Bodenteilführung, und
- Fig. 9: eine Prinzipskizze einer Kommissioniervorrichtung mit längs einer verschwenkbaren Stange geführt verfahrbarem Greifer.

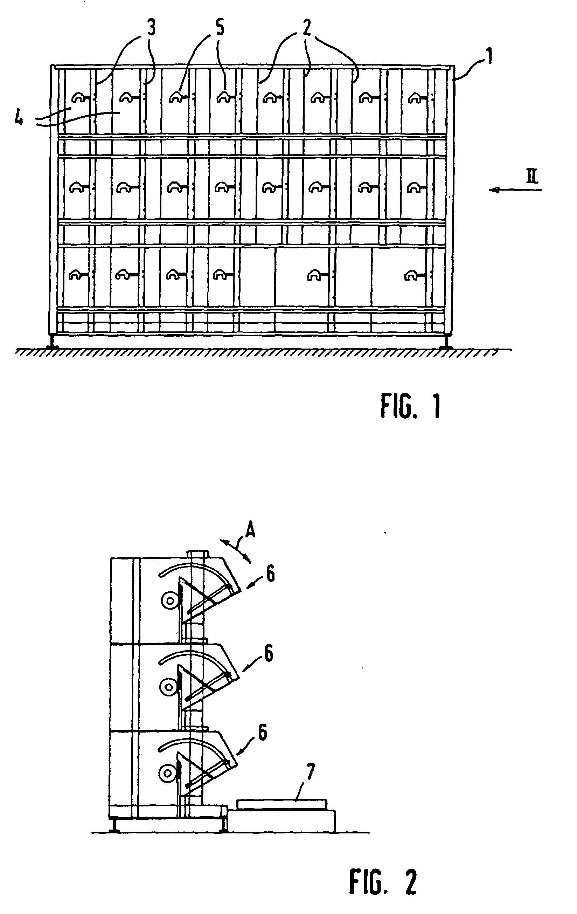

Fig. 1 zeigt eine Vorderseitenansicht der Kommissioniervorrichtung. Diese besteht aus einem Tragrahmen 1, in dem mittels beweglichen Seitenwänden 2 und fest angeordneten, das Ausgabemittel tragenden Wänden 3 entsprechende, die auszugebenden Artikel aufnehmende Aufnahmen 4 ausgebildet sind. Die Seitenwände 2 sind dabei in entsprechend am Tragrahmen 1 ausgebildeten Nuten einsteckbar und versetzbar und können mit geeigneten Mitteln, beispielsweise Schrauben, befestigt werden, um auf diese Weise auf entsprechende sich ändernde Artikelgrößen reagieren zu können. Unterschiedlich große Aufnahmen sind in Fig. 1 in der untersten Aufnahmenzeile gezeigt. Jeder Aufnahme ist ein Ausgabemittel 5 zugeordnet, hier in Form eines Greifers. Wie Fig. 2 zu entnehmen ist, ist der Greifer über einen Schwenkmechanismus 6 verschwenkbar, wie durch den Doppelpfeil A angedeutet ist. Hiermit ist es möglich, den Greifer zum Zugriff auf den obenliegenden Artikel in die Aufnahme einzufahren, nach Greifen des Artikels diesen wieder herauszufahren und in eine Position zu bringen, in welcher der gegriffene Artikel auf das Förderband 7 abgegeben werden kann. Im gezeigten Ausführungsbeispiel umfaßt der Schwenkmechanismus einen Schwenkarm, welcher im folgenden noch beschrieben werden wird.

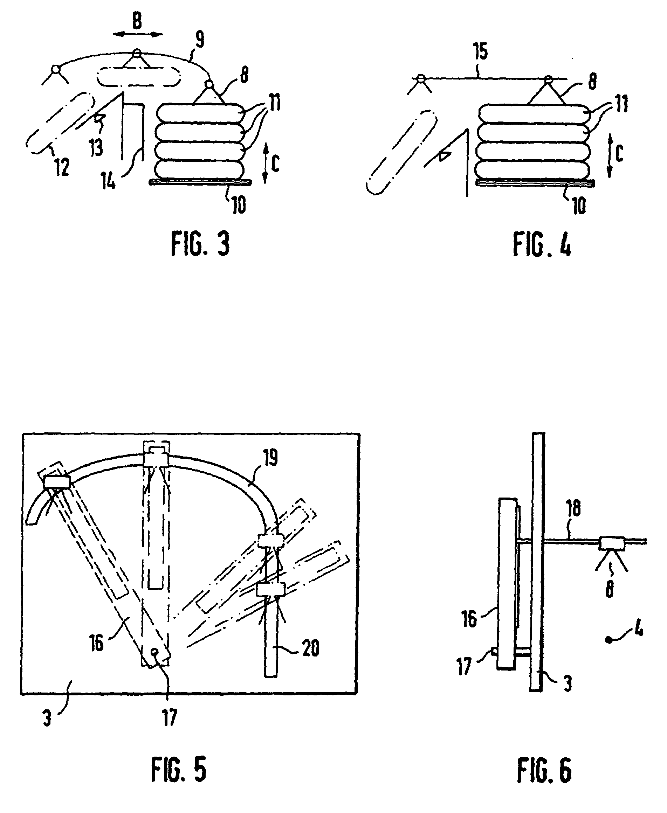

Die mit dem aus Fig. 2 bekannten Schwenkmechanismus mögliche Führung des Greifers ist in Form einer Prinzipskizze in Fig. 3 dargestellt. Gezeigt ist ein Greifer 8, der mittels des Schwenkmechanismus längs der bogenförmigen Bahn 9 hinund herverfahrbar ist, vgl. Doppelpfeil B. Auf einem höhenverstellbaren (Doppelpfeil C) Bodenteil 10 der Aufnahme sind mehrere Artikel 11 angeordnet. Wie Fig. 3 zeigt, werden die Artikel 10 so weit nach oben mittels des Bodenteils gefördert, bis der Greifer 8 am obenliegenden angreifen kann. Nachdem der Greifer 8 den Artikel 11 gegriffen hat, wird dieser mit dem Schwenkmechanismus längs der bogenförmigen Bahn 9 bewegt, was dazu führt, daß der gegriffene Artikel angehoben und damit vereinzelt wird. Der Greifer 9 wird bis zum Ende der bogenförmigen Bahn geführt, wo er den gegriffenen Artikel auf eine Rutsche 12 abgibt, vgl. die linke Endstellung in Fig. 3. Der Rutsche 12 ist ein Sensorelement 13 zum Zählen der Artikelzahl zugeordnet. Fig. 3 zeigt ferner einen an der Rutsche 12 lösbar befestigbaren Distanzeinsatz 14, welcher dazu dient, eine frontseitige Führung der Artikel zu gewährleisten und ein Verkippen derselben zu verhindern, wenn diese so klein sind, daß sie nicht bis vorne an die Rutsche 12 ragen und von dieser geführt werden können. Wie Fig. 3 ersichtlich zeigt, ist mit einer derartigen bogenförmigen Führungsbahn ein sicheres Vereinzeln infolge des bereits zu Beginn der Entnahmebewegung erfolgenden Hubes möglich. Nach erfolgter Entnahme eines Artikels wird das Bodenteil 10 nachgeführt, bis der nächste Artikel wieder im Bereich des Greifers 8 positioniert ist.

Eine Alternativausführung zeigt Fig. 4. Bei dieser wird der Greifer 8 längs einer im wesentlichen horizontalen Bahn 15 verfahren. Auch hier ist das Bodenteil 10 wieder höhenverstellbar ausgeführt. Die Entnahme erfolgt hier derart, daß das Bodenteil so weit nach oben verfährt, bis der Greifer 8 den obenliegenden Artikel greift. Anschließend verfährt das Bodenteil ein kurzes Stück nach unten, bis der gegriffene Artikel vereinzelt ist. Hiernach wird der Greifer 8 in die linke Position gebracht, in welcher der gegriffene Artikel abgegeben wird.

Fig. 5 zeigt eine konkrete Ausführung eines Schwenkmechanismus in Form einer Prinzipskizze. Gezeigt ist ein an einer Seitenwand 3 angeordneter Schwenkarm 16, der um eine feste Drehachse 17 verschwenkbar ist. An dem Schwenkarm ist oberseitig mittels einer stangenartigen Halterung 18 der Greifer 8 angeordnet, wobei dieser auf der Halterung 18 verschiebbar gelagert ist. Die Halterung 18 tritt durch die Seitenwand in einer Durchbrechung 19 durch, welche gleichzeitig der Führung dient. Die Führung ist im oberen Bereich im wesentlichen bogenförmig ausgebildet. Die Halterung 18 kann fest am Schwenkarm 16 angeordnet sein, wobei die Führung derart ist bzw. der Schwenkarm 16 derart angeordnet und gelagert ist, daß die in Fig. 3 gezeigte bogenförmige Bewegungsbahn durchfahren wird und die entsprechenden Angreif- und Abgabepositionen angefahren werden können. Wie Fig. 5 zeigt, ist bei dieser beschriebenen Lösung die Durchbrechung 19 vertikal verlaufend im Bereich 20 geführt. In diesem Fall ist die Halterung 18 verschiebbar an dem Schwenkarm 16 gelagert, was es ermöglicht, daß diese sich, von der Durchbrechung 19 vorgegeben, längs dieser verschiebt. Damit ist es möglich, den Greifer bis tief in die Aufnahme herunterzufahren, und auch tieferliegende Artikel greifen zu können. Bei dieser Ausführungsform kann auf ein höhenverstellbares Hubteil verzichtet werden, da der Greifer selbst bis tief in die Aufnahme eingefahren werden kann.

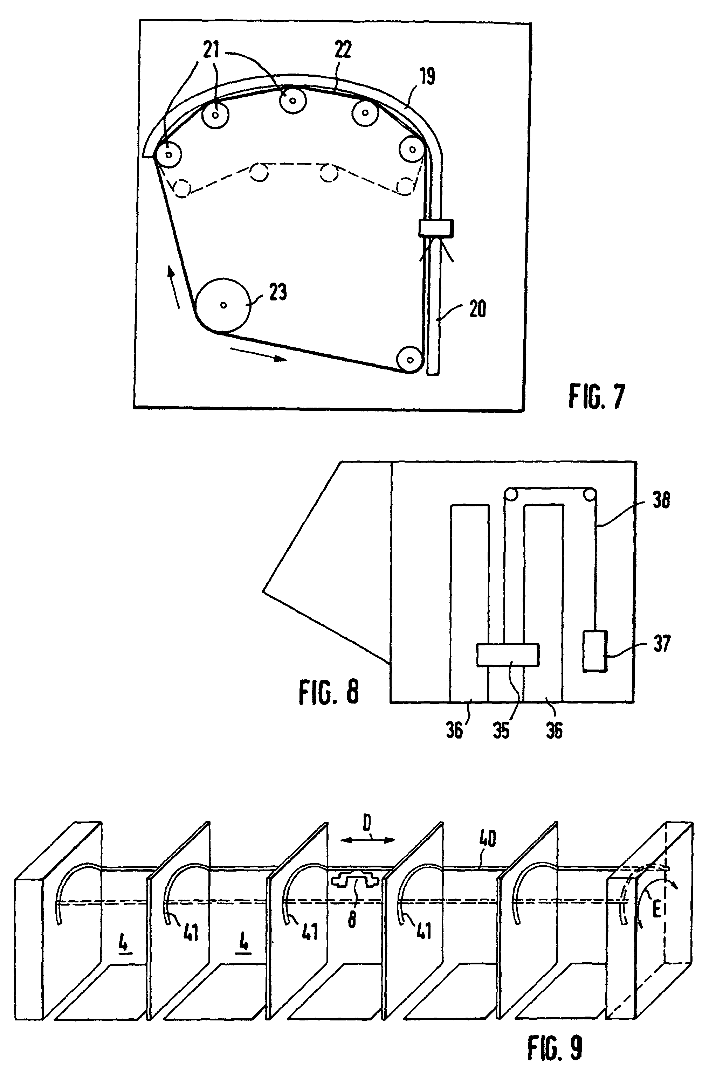

Eine Alternativausführung zu dem in den Figuren 5, 6 beschriebenen Schwenkarm zeigt Fig. 7. Bei dieser ist der Greifer 8 - selbstverständlich könnte hier auch ein anderes Ausgabemittel beispielsweise in Form eines Saugers od.dgl. angeordnet sein - an einer über mehrere Rollen 21 geführten Kette 22 angeordnet. Diese wird über einen geeigneten Antrieb 23 angetrieben, wobei selbstverständlich auch der vorher beschriebene Schwenkarm 16 (Fig. 5, 6) über einen entsprechenden Antrieb verfügt. In Fig. 7 ist die Führung der Kette für den Fall gezeigt, daß die Durchbrechung 19 einen Vertikalbereich 20 aufweist. Angegegeben ist aber auch eine Führung für den Fall, der im wesentlichen einer Entnahmebewegung wie in Fig. 3 beschrieben entspicht (gestrichelte Kettenführung). In diesem Fall ist eine Führung der Kette bis an den unteren Rand der Seitenwand nicht erforderlich.

Fig. 8 zeigt in einer Prinzipskizze die Außenseite einer die Aufnahme begrenzenden Seitenwand und die Hubeinrichtung für das die Artikel tragende, plattenförmige Bodenteil. Dieses ist, über eine nicht gezeigte Halterung, an einem Schlitten 35 angeordnet, der über Rollen od.dgl. an zwei Schienen 36, welche im Bereich der Seitenwand angeordnet sind, geführt ist. Um ihn zu bewegen, ist der Schlitten über ein Zugseil 38 mit einer Stelleinrichtung 37 verbunden, so daß auf platzsparende Weise ein ausreichender Hub möglich ist.

Fig. 9 zeigt schließlich eine weitere Ausführungsform der erfindungsgemäßen Kommissioniervorrichtung. Auch bei dieser sind eine Vielzahl von Aufnahmen 4 vorgesehen. Diesen ist aber nicht ein jeweils separater Greifer zugeordnet, sondern es ist lediglich ein einzelner Greifer 8 vorgesehen, welcher an einer stangenartigen Führung 40 verfahrbar ist (vgl. Doppelpfeil D). Die Führung 40 ist, vgl. Doppelpfeil E, beispielsweise über einen Schwenkarm beweglich und verschwenkbar gelagert und kann zwischen einer außerhalb der in den Seitenwänden ausgebildeten Führung 41 und einer in Fig. 13 gestrichelt eingezeichneten Endposition mit Eingriff in die Führungen 41 bewegt werden. Die Entnahme erfolgt hier derart, daß die Halterung 40 zunächst aus dem Seitenwandbereich bewegt wird, wonach der Greifer 8 vor die gewünschte Aufnahme 4 gefahren wird. Anschließend wird die Stange 40 eingefahren, wonach der Greifer 8 den Artikel aufnimmt. Zum Entnehmen wird die Stange 40 wieder ausgefahren, der Greifer 8 gibt den Artikel ab. Anschließend wird, sofern erforderlich, die nächste ausgewählte Aufnahme 4 angefahren. Diese Ausführungsform eignet sich insbesondere für Mittel- und Langsamdrehervorrichtungen.

## Patentansprüche

1. Rechnergesteuerte Kommissioniervorrichtung zum Kommissionieren von Softgood- Artikeln, mit einem motorisch angetriebenen Förderband und mehreren, wenigstens an einer Seite des Förderbandes neben- und/oder übereinander angeordneten Aufnahmen zum Aufnehmen der zu kommissionierenden, aufeinanderstapelbaren Softgood-Artikel, die mittels eines rechnergesteuerten Ausgabemittels auf das die Artikel weitertransportierende Förderband abgegeben werden, **dadurch gekennzeichnet, daß** das Ausgabemittel (5) als bewegliches, an dem in der Aufnahme obenliegenden Artikel (11) oberseitig lösbar angreifendes, diesen entnehmendes und zum Förderband (7) hin abgebendes Mittel ausgebildet ist, und daß dem Ausgabemittel wenigstens ein Sensorelement zum Detektieren der Positionierung des Ausgabemittels bezüglich des obenliegenden Artikels vor dem Greifen desselben zugeordnet ist, wobei der Betrieb des Ausgabemittels in Abhängigkeit des Detektionsergebnisses erfolgt, wobei den mehreren nebenund/oder übereinander angeordneten Aufnahmen jeweils ein eigenes Ausgabemittel zugeordnet ist, oder wobei mehreren nebeneinander angeordneten Aufnahmen ein gemeinsames, längs einer Führung bewegbares und vor einer einen zu entnehmenden Artikel beinhaltenden Aufnahme positionierbares Ausgabemittel zugeordnet ist.

2. Kommissioniervorrichtung nach Anspruch 1, **dadurch gekennzeichnet, daß** das Ausgabemittel als zangenartiger Greifer (8), als Saugmittel oder als klebendes Haftmittel ausgebildet ist.

3. Kommissioniervorrichtung nach Anspruch 2 oder 3, **dadurch gekennzeichnet, daß** das Ausgabemittel zwischen der am Artikel (11) angreifenden Stellung und der den Artikel (11) abgebenden Stellung längs einer bogenoder kurvenförmigen, einen Mindesthub des Artikels (11) ermöglichenden Bahn (9) geführt ist.

4. Kommissioniervorrichtung nach Anspruch 2 oder 3, **dadurch gekennzeichnet, daß** das Ausgabemittel längs einer im wesentlichen geradlinigen, gegebenenfalls zur Horizontalen geneigt verlaufenden Bahn (15) geführt ist.

5. Kommissioniervorrichtung nach Anspruch 3 oder 4, **dadurch gekennzeichnet, daß** das Ausgabemittel zumindest dann, wenn es in eine Position oberhalb des zu entnehmenden Artikels gebracht ist, längs einer im wesentlichen geradlinigen, im wesentlichen senkrecht verlaufenden Bahn (20) geführt ist.

6. Kommissioniervorrichtung nach einem der vorangehenden Ansprüche, **dadurch gekennzeichnet, daß** das Sensorelement als am Ausgabemittel derart angeordneter Tastschalter (27) ausgebildet ist, daß ein zur Steuerung des Betriebs erforderliches Signal bei hinreichender, den Angriff am Artikel ermöglichender Positionierung gebbar ist, wobei vorzugsweise zwei Tastschalter (27) vorgesehen sind.

7. Kommissioniervorrichtung nach einem der vorangehenden Ansprüche, **dadurch gekennzeichnet, daß** das Ausgabemittel über eine motorisch angetriebene Führungseinrichtung bewegbar ist.

8. Kommissioniervorrichtung nach Anspruch 7, **dadurch gekennzeichnet, daß** die Führungseinrichtung eine Kette (22), ein Seilzug oder ein Riemen ist, woran das Ausgabemittel, vorzugsweise über eine zwischengeschaltete, insbesondere stangenförmige Halterung (18), angeordnet ist.

9. Kommissioniervorrichtung nach Anspruch 7, **dadurch gekennzeichnet, daß** die Führungseinrichtung ein stangenartiger, dreh- oder schwenkbarer Führungsarm (16) ist, an welchem das Ausgabemittel, gegebenenfalls beweglich und vorzugsweise über eine zwischengeschaltete, insbesondere stangenartige Halterung (18) angeordnet ist.

10. Kommissioniervorrichtung nach Anspruch 8 oder 9, **dadurch gekennzeichnet, daß** die Führungseinrichtung an einer die Aufnahme (4) begrenzenden Seitenwand (3) o.dgl. außenseitig angeordnet ist, wobei die Seitenwand (3) eine Durchbrechung (19, 20) aufweist.

11. Kommissioniervorrichtung nach Anspruch 10, **dadurch gekennzeichnet, daß** die Durchbrechung (19, 20) im wesentlichen der Bewegungsbahn des Ausgabemittels, gegebenenfalls der Halterung (18) entspricht und der, gegebenenfalls unter Verwendung eines Nutsteines o.dgl., Führung des Ausgabemittels, gegebenenfalls der Halterung (18) dient.

12. Kommissioniervorrichtung nach einem der Ansprüche 8 bis 11, **dadurch gekennzeichnet, daß** das Ausgabemittel an der Halterung (18) verschiebbar gelagert ist.

13. Kommissioniervorrichtung nach einem der Ansprüche 1 bis 7, **dadurch gekennzeichnet, daß** die Führungseinrichtung als sich horizontal oder vertikal längs mehrerer Aufnahmen (4) erstreckende Führungsschiene (40) o.dgl. ausgebildet ist, an welcher wenigstens ein Greifer (8) längs der Aufnahmen (4), an diesen zum Entnehmen eines Artikels reversibel positionierbar, verfahrbar gelagert ist, wobei die Führungsschiene (40) und/oder der Greifer (8), gegebenenfalls mittels eines an der Führungsschiene schwenkbar gelagerten Führungsarmes, zur Ermöglichung des Zugriffs bezüglich der Aufnahmen (4) beweglich, insbesondere schwenkbar ist.

14. Kommissioniervorrichtung nach einem der vorangehenden Ansprüche, **dadurch gekennzeichnet, daß** die Aufnahme (4) ein die Artikel tragendes, mittels einer Hubeinrichtung motorisch höhenverstellbares Bodenteil (10) aufweist.

15. Kommissioniervorrichtung nach Anspruch 14, **dadurch gekennzeichnet, daß** das Bodenteil (10) mit der Hubeinrichtung über eine vorzugsweise als mehreckige Stange ausgebildete Halterung (32) verbunden ist.

16. Kommissioniervorrichtung nach Anspruch 15, **dadurch gekennzeichnet, daß** das Bodenteil (10) längs der Halterung (32) verschiebbar befestigbar ist.

17. Kommissioniervorrichtung nach einem der vorangehenden Ansprüche, **dadurch gekennzeichnet, daß** zumindest ein Teil der die Aufnahme (4) begrenzenden Seitenwände (2) versetzbar ausgebildet sind.

18. Kommissioniervorrichtung nach einem der vorangehenden Ansprüch, **gekennzeichnet durch** wenigstens ein Sensorelement, insbesondere ein optisches Sensorelement zum Detektieren des Füllstandes der Aufnahme.

19. Kommissioniervorrichtung nach einem der vorangehenden Ansprüch, **dadurch gekennzeichnet, daß** der Aufnahme eine zum Förderband hin geneigte Rutsche (12) zugeordnet ist, auf welche der jeweilige Artikel gegeben wird.

20. Kommissioniervorrichtung nach Anspruch 19, **dadurch gekennzeichnet, daß** in die Rutsche (12) eine Sensoreinrichtung (13), insbesondere eine Lichtschranke zum Zählen der auf die Rutsche (12) gegebenen Artikel integriert ist.

21. Kommissioniervorrichtung nach Anspruch 19 oder 20, **gekennzeichnet durch** wenigstens einen lösbar an der Rutsche (12) im Bereich zur Aufnahme hin anbringbaren Distanzeinsatz (14).

## Claims

1. Computer-controlled picking device for picking soft goods articles, having a motor-driven conveyor belt and plural receptacles disposed at least on one side of the conveyor belt adjacent to one another or one above another for receiving the soft goods, which are to be picked and stacked one on top of another and which are transferred by means of a computer-controlled issuing means on to the conveyor belt conveying the goods onwards, **characterised in that** the issuing means (5) is formed as a moving means detachably grasping the top of the uppermost article (11) on the pile in the receptacle, removing the same, and transferring the same to the conveyor belt (7), and **in that** the issuing means has at least one sensor element for detecting the position of the issuing means relative to the uppermost article before grasping the same, wherein the operation of the issuing means is dependent on the detection result, wherein each receptacle disposed adjacent to another and/or above another has its own issuing means, or wherein plural receptacles disposed adjacent to another and/or one above another are allocated a common issuing means movable along a guide and positionable in front of a receptacle containing an article to be removed.

2. Picking device according to claim 1, **characterised in that** the issuing means is formed as a tooth-like grabber (8), as a suction means, or as an adhesive means.

3. Picking device according to claim 2 or 3, **characterised in that** the issuing means is guided between the position for grasping the article (11) and the position for depositing the article (11) along a curved path (9) permitting minimum lifting of the article (11).

4. Picking device according to claim 2 or 3, **characterised in that** the issuing means is guided along a substantially rectilinear path (15) which is optionally inclined to the horizontal.

5. Picking device according to claim 3 or 4, **characterised in that** the issuing means is guided along a substantially rectilinear, substantially vertical path (20) at least when it is in a position above the article to be removed.

6. Picking device according to one of the preceding claims, **characterised in that** the sensor element is formed as a push button (27) disposed on the issuing means in such a manner that a signal necessary for controlling operation may be emitted when the position of the issuing means permits grasping of the article, two push buttons preferably being provided.

7. Picking device according to one of the preceding claims, **characterised in that** the issuing means is movable via a motor-driven guide device.

8. Picking device according to claim 7, **characterised in that** the guide device is a chain (22), Bowden cable or belt, on which the issuing means is disposed preferably via an interposed, in particular rod-like mount (18).

9. Picking device according to claim 7, **characterised in that** the guide device is a rod-like rotatable or pivotable guide arm (16), on which the issuing means is disposed optionally movably and preferably via an interposed, in particular rod-like mount (18).

10. Picking device according to claim 8 or 9, **characterised in that** the guide device is disposed on a side wall (3) or the like defining the receptacle (4) and having a breach (19, 20).

11. Picking device according to claim 10, **characterised in that** the breach (19, 20) corresponds substantially to the path of motion of the issuing means, optionally of the mount (18) and acts, optionally with the use of a groove stone or the like to guide the issuing means, optionally the mount (18).

12. Picking device according to one of claims 8 to 11, **characterised in that** the issuing means is displaceably mounted on the mount (18).

13. Picking device according to one of claims 1 to 7, **characterised in that** the guide device is formed as a guide rail or the like which extends horizontally or vertically along plural receptacles (4), on which rail at least one grabber (8) is movably mounted along the receptacles so as to be reversibly positionable for the removal of an article, the guide rail (40) and/or the grabber (8) being movable, in particular pivotable relative to the receptacles (4) in order to permit access, optionally by means of a guide arm pivotably mounted on the guide rail.

14. Picking device according to one of the preceding claims, **characterised in that** the receptacle (4) has a bottom part (10) carrying the articles which is motorically adjustable in height by means of a lifting device.

15. Picking device according to claim 14, **characterised in that** the bottom part (10) is connected to the lifting device via a mount (32) preferably formed as a polygonal rod.

16. Picking device according to claim 15, **characterised in that** the bottom part (10) is displaceable and fixable along the mount (32).

17. Picking device according to one of the preceding claims, **characterised in that** at least some of the side walls (2) defining the receptacle (4) are formed displaceably.

18. Picking device according to one of the preceding claims, **characterised by** at least one sensor element, in particular an optical sensor element for detecting the fill level of the receptacle.

19. Picking device according to one of the preceding claims, **characterised in that** the receptacle is allocated a chute (12) inclined to the conveyor belt, on to which chute the respective article is passed.

20. Picking device according to claim 19, **characterised in that** a sensor device (13), in particular a light barrier for counting the articles passed on to the chute (12) is incorporated in the chute (12).

21. Picking device according to claim 19 or 20, **characterised by** at least one distance insert (14) mountable detachably on the chute (12) in the region near the receptacle.

## Revendications

1. Dispositif à commande par ordinateur pour la préparation de commandes d'articles souples, du type comportant une bande d'alimentation entraînée par moteur et plusieurs réceptions disposées au moins sur un côté de la bande d'alimentation, côte à côte ou l'une au-dessus de l'autre en vue de la réception des articles souples à commander empilables les uns par dessus les autres, et qui, grâce à un moyen d'extraction commandé par ordinateur sont déposés sur la bande d'alimentation emmenant les articles, **caractérisé en ce que** le moyen d'extraction (5) est réalisé sous forme d'un moyen mobile s'accrochant de façon détachable au côté supérieur de l'article (11) reposant sur le dessus de la réception, le prélève, et le délivre sur la bande d'alimentation et **en ce que**,au moyen d'extraction est associé au moins un élément de détection en vue de détecter la position du moyen d'extraction par rapport à l'article reposant sur le dessus avant l'accrochage de celui-ci, d'où résulte le fonctionnement du moyen d'extraction en fonction du résultat de la détection, chacune de la pluralité de réceptions situées côte à côte ou au-dessus l'une de l'autre étant associée à son propre moyen d'extraction ou encore plusieurs réceptions situées côte à côte ou l'une au-dessus de l'autre étant associées à un moyen d'extraction commun, déplaçable le long d'un guidage positionnable devant une réception contenant un article à prélever.

2. Dispositif de commande selon la revendication 1, **caractérisé en ce que** le moyen d'extraction consiste en un système du type grappin en forme de pince (8), en un moyen d'aspiration ou en adhésif collant.

3. Dispositif de commande selon l'une des revendications 1 ou 2, **caractérisé en ce que** le moyen d'extraction est guidé entre une position d'accrochage de l'article (11 ) et une position de délivrance de l'article (11 ), le long d'un trajet en forme d'arrondi ou de courbe, rendant possible une course minimale de l'article (11).

4. Dispositif de commande selon l'une des revendications 2 ou 3, **caractérisé en ce que** le moyen d'extraction est guidé le long d'un trajet (15) s'étendant le long d'une ligne pratiquement droite et éventuellement inclinée par rapport à l'horizontale.

5. Dispositif de commande selon l'une des revendications 3 ou 4, **caractérisé en ce que** le moyen d'extraction, au moins quand il est amené dans une position située au-dessus de l'article à prélever, est guidé le long d'un trajet (20) s'étendant pratiquement en ligne droite et pratiquement verticalement.

6. Dispositif de commande selon l'une quelconque des revendications précédentes, **caractérisé en ce que** l'élément de détection consiste en un interrupteur tactile (27) disposé sur le moyen d'extraction d'une manière telle qu'un signal nécessaire pour la commande du fonctionnement est donné lors du positionnement rendant possible l'accrochage à un article à extraire, deux interrupteurs tactiles (27) étant de préférence prévus.

7. Dispositif de commande selon l'une quelconque des revendications précédentes, **caractérisé en ce que** le moyen d'extraction peut être déplacé au moyen d'un système de guidage entraîné par un moteur.

8. Dispositif de commande selon la revendication 7, **caractérisé en ce que** le système de guidage consiste en une chaîne (22), un câble de traction ou une courroie, auquel est associé le moyen d'extraction, de préférence par l'intermédiaire d'un appui (18) en particulier en forme de tige.

9. Dispositif de commande selon la revendication 7, **caractérisé en ce que** le système de guidage consiste en un bras de guidage en forme de tige rotative ou basculable (16), auquel est associé le moyen d'extraction, éventuellement et de préférence un arrêt (18), en particulier en forme de tige.

10. Dispositif de commande selon l'une des revendications 8 ou 9, **caractérisé en ce que** le système de guidage présente une paroi latérale (3) délimitant la réception (4) ou analogue, située du côté extérieur, cette paroi latérale (3) présentant une traversée (19, 20).

11. Dispositif de commande selon la revendication 10, **caractérisé en ce que** la traversée (19, 20) correspond essentiellement au trajet de déplacement du moyen d'extraction, éventuellement de l'arrêt (18) et sert, éventuellement par utilisation d'une cannelure, au guidage du moyen d'extraction et éventuellement de l'arrêt (18).

12. Dispositif de commande selon l'une des revendications 8 à 11, **caractérisé en ce que** le moyen d'extraction est monté coulissant par rapport à l'arrêt (18).

13. Dispositif de commande selon l'une quelconque des revendications 1 à 7, **caractérisé en ce que** le système de guidage consiste en des rails de guidage (40) s'étendant horizontalement ou verticalement le long de plusieurs évidements (4) ou analogues, sur lesquels au moins un grappin (8) peut être positionné de manière réversible, le long des réceptions (4), en vue de l'extraction de celles-ci d'un article, les rails de guidage (40) et/ou le grappin (8) étant mobiles et en particulier basculables éventuellement grâce à un bras de guidage monté basculable sur les rails de guidage en vue de permettre une saisie par rapport aux réceptions (4).

14. Dispositif de commande selon l'une quelconque des revendications précédentes, **caractérisé en ce que** la réception (4) présente une portion de base (10) réglable en hauteur au moyen d'un moteur et portant l'article au moyen d'un système de moyeu.

15. Dispositif de commande selon la revendication 14, **caractérisé en ce que** la portion de base (10) est réunie au système de moyeu par l'intermédiaire d'un arrêt (32) se composant d'une ou de préférence plusieurs tiges.

16. Dispositif de commande selon la revendication 15, **caractérisé en ce que** la portion de base (10) est montée immobilisable et déplaçable le long de l'arrêt (32).

17. Dispositif de commande selon l'une quelconque des revendications précédentes, **caractérisé en ce que** au moins une portion de la réception (4) est agencée déplaçable par rapport aux cloisons latérales qui les délimitent (2).

18. Dispositif de commande selon l'une quelconque des revendications précédentes, **caractérisé en ce que** au moins un élément de détection, en particulier un élément de détection optique est prévu pour la détection de l'état de remplissage de la réception.

19. Dispositif de commande selon l'une quelconque des revendications précédentes, **caractérisé en ce que**, à la réception est associée une glissière inclinée par rapport à la bande d'alimentation et sur laquelle sont délivrés chaque article.

20. Dispositif de commande selon la revendication 19, **caractérisé en ce que** dans la glissière (12) est intégré un système de détection (13) en particulier une barrière lumineuse pour le comptage des articles délivrés sur la glissière.

21. Dispositif de commande selon la revendication 19 ou la revendication 20, **caractérisé par** au moins un accessoire de mesure de distance (14) pouvant être monté détachable sur la glissière (12) dans la zone de réception.
